Europäisches Patentamt

European Patent Office

Office européen des brevets

(19)

(11) **EP 0 576 359 B1**

(12) **FASCICULE DE BREVET EUROPEEN**

(45) Date de publication et mention
de la délivrance du brevet:
**12.08.1998 Bulletin 1998/33**

(51) Int Cl.⁶: **H04L 25/03**

(21) Numéro de dépôt: **93401617.1**

(22) Date de dépôt: **23.06.1993**

(54) **Procédé et dispositif égaliseur à retour de décisions pour la transmission par blocs de symboles d'information**

Verfahren und Einrichtung zur entscheidungsrückgekoppelten Entzerrung für die blockweise Übertragung von Informationssymbolen

Method and apparatus for decision feedback equalisation for the block transmission of information symbols

(84) Etats contractants désignés:
**DE GB**

(30) Priorité: **26.06.1992 FR 9207917**

(43) Date de publication de la demande:
**29.12.1993 Bulletin 1993/52**

(73) Titulaire: **FRANCE TELECOM**
**75015 Paris (FR)**

(72) Inventeur: **Kawas Kaleh, Ghassan**
**F-75013 Paris (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
• **39th IEEE Vehicular Technology Conference 1 - 3 / 5 / 1989, San Francisco, US; IEEE New York, 1989; pages 142 - 146, Crozier et al.: "Short block equalisation techniques employing channel estimation for fading time - dispersive channels"**
• **IEEE Global Telecommunications Conference 1990; 2 - 5 / 12 / 1990, San Diego, US; IEEE, New York, US, 1990; pages 1188 1195, Zervos: "High - speed carrierless passband transmission over the local cable network"**
• **ELECTRONICS LETTERS vol. 27, no. 13, Juin 1991, ENAGE GB pages 1180 - 1182 LIU 'New Low - complexity decision feedback equalisation technique for narrowband digital cellular systems'**
• **IEEE Global Telecommunications Conference 1982, 29 / 11 - 2 / 12 / 1982, Miami, US; IEEE, New York, US, 1982; pages 686 - 690 Urkowitz: "Synthesis of multiple random processes based upon a Cholesky decomposition"**

**Description**

La présente invention est relative à un procédé et à un dispositif égaliseur à retour de décisions pour la transmission par blocs de symboles d'information transmis sur un canal distordant variable.

La transmission par blocs de symboles d'information à travers un canal distordant et rapidement variable au cours du temps, comme le canal radio-électrique à évanouissement sélectif en fréquence, impose de sérieuses contraintes à la réception, afin de permettre une réception et un décodage convenables de ces symboles ainsi transmis. Par symboles d'information, on entend tout signal constitué soit par les valeurs de variables logiques soit par les valeurs de variables analogiques numérisées.

En particulier, la réception ne peut être effectuée qu'en présence d'interférences entre symboles. Un tel système de transmission par blocs a été décrit dans l'article de F. Hsu, intitulé "Data Directed Estimation Techniques for Single-Tone HF Modems", IEEE Military Commun. Conf., Boston, MA, Oct 1985, pp. 12.4.1-10. Ce système a été reconnu approprié et a été adopté dans les normes décrivant et fixant les caractéristiques techniques des modems du canal ionosphérique (HF) et peut également convenir aux systèmes de communication avec les mobiles.

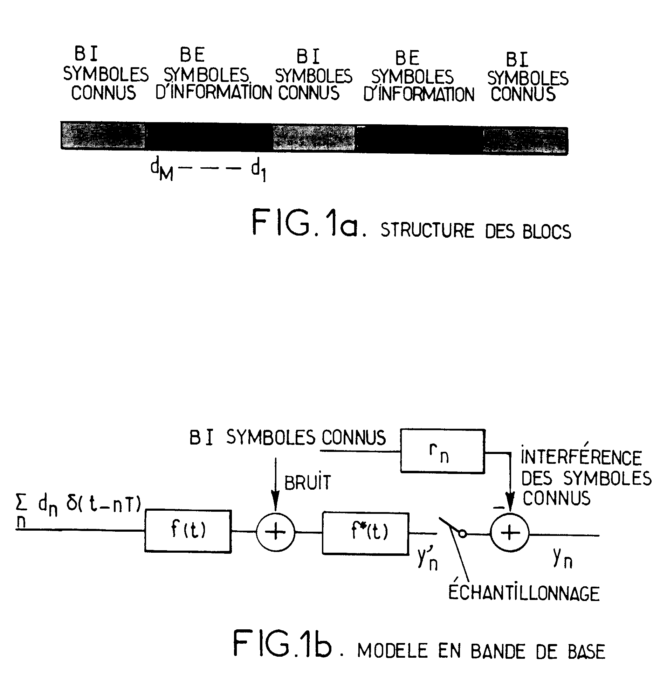

A titre indicatif, on rappelle que ce système de transmission par blocs est basé sur l'hypothèse selon laquelle le canal de transmission est constant, dans ses caractéristiques physiques ou radioélectriques, pendant la transmission d'un bloc de symboles suffisamment court. L'estimation du canal, ou des paramètres physiques ou radioélectriques de celui-ci, estimation nécessaire au traitement effectué à la réception, est obtenue grâce à la transmission de symboles connus, sous forme de blocs intercalés BI entre les blocs de symboles d'information, BE, ainsi qu'illustré en figure 1a. Ces blocs de symboles connus BI ont également pour rôle de soustraire leur interférence du signal traité et de séparer ainsi les blocs de symboles BE, afin que chaque bloc de symboles successifs puisse être traité indépendamment des blocs adjacents. Une telle mesure implique que le nombre de symboles d'un bloc connu ne soit pas inférieur à la durée de la réponse impulsionnelle du canal, exprimée en nombre de symboles, plus communément désignée par mémoire du canal. Un récepteur approprié correspondant est également décrit dans l'article précité et est désigné par "Nonlinear Decision-Directed Estimator" ou NDDE. Ce type de récepteur exige en fait la résolution de M/2 systèmes d'équations de dimensions décroissantes, M/2,...,2, pour des blocs de symboles comportant M symboles.

La figure 1b montre une partie d'un modèle équivalent en bande de base d'un tel système de communication. Les symboles $d_n$, en notation complexe, sont indépendants, identiquement distribués et prennent des valeurs équiprobables dans un alphabet de symboles fini. Les symboles modulent l'amplitude d'une impulsion $f(t)$ d'énergie finie et de support $[0,LT]$ où T représente la durée qui sépare l'émission de deux symboles consécutifs. Le bruit engendré au cours de la transmission est un bruit gaussien, centré et de densité spectrale de puissance $2N_o$.

La réception débute par un filtrage adapté optimal $f^*(-t)$, l'astérisque "*" désignant le conjugué complexe, suivi par un échantillonnage, au rythme des symboles. En supposant que le canal, c'est-à-dire ses paramètres physiques et radioélectriques, est constant durant l'observation d'un bloc de symboles et qu'une estimation parfaite de $f(t)$ est alors disponible au niveau du récepteur, une mise en oeuvre numérique du filtrage adapté est réalisable. La sortie du filtre adapté échantillonné aux instants nT s'écrit alors :

$$y'_n = \sum_{k=-L}^{L} r_k.d_{n-k} + u_k$$

avec n = 1,2,...,M

relation dans laquelle $\{r_k\}$ désigne les échantillons aux instants kT de la réponse impulsionnelle de la cascade constituée par l'impulsion $f(t)$ d'énergie finie et par le filtre adpaté $f^*(-t)$. On note la symétrie hermitienne $r_{-k} = r_k^*$. Les échantillons $u_k$, consistant en fait à la contribution due au bruit au cours de l'échantillonnage à la réception, sont les concrétisations de variables aléatoires gaussiennes centrées et de fonction d'auto-corrélation

$$E(u_n.u_{n-k}^*) = 2N_o.r_k.$$

Dans un tel système de transmission par blocs, l'interférence des symboles connus $d_n$ d'un bloc intercalaire BI, avec n>M et n<1, qui voisinent un bloc de symboles BE composé de symboles $d_n$ avec $n\epsilon[1,M]$ est soustraite de l'échantillon $y'_n$ obtenu en sortie du filtre adapté, ce qui permet d'obtenir ainsi un vecteur d'observation

$$y = (y_M, Y_{M-1},...,y_1)^t$$

qui ne dépend pas des échantillons connus mais du vecteur de symboles suivant

$$D = (d_M, d_{M-1}, ..., d_1)^t$$

où t désigne l'opérateur de transposition. Tout vecteur d'observation Y vérifie la relation :

$$Y = R.D + U$$

relation dans laquelle R est une matrice de Toeplitz de dimension MxM, de symétrie hermitienne et d'éléments

$$R_{ij} = rj-1$$

avec i,j = 0,1,...,M-1.

U est une concrétisation d'un vecteur gaussien centré et de matrice de covariance $2N_o.R$.

Les récepteurs de ce type, désignés par récepteurs NDDE, permettent d'obtenir à partir du vecteur Y une décision fiable sur le vecteur de symboles émis D. Toutefois, ce type de récepteur nécessite la résolution de M/2, systèmes d'équations de dimensions décroissantes, M/2 ..., 2, où M, nombre de symboles par bloc, est supposé pair.

Enfin, des égaliseurs désignés par égaliseurs DFE, Decision Feedback Equalizer en vocable anglo-saxon, sont normalement adaptés pour la transmission en continu. Leur utilisation pour la transmission par blocs est pour cette raison moins efficace.

De tels processus d'égalisation conventionnelle ont fait l'objet d'une description dans l'article intitulé "High-Speed Carrierless Passband Transmission Over the Local Cable Network" publié par Nikolaos A. Zervos, Globecom 90 - IEEE Global Telecommunications Conference & Exhibition, San Diego, California . December 2-5, 1990, pages 1183-1194. La technique mise en oeuvre décrite dans l'article précité concerne la transmission continue, laquelle est connue depuis plus de 25 ans, dans une application différente. La présente invention a pour but de simplifier la mise en oeuvre des récepteurs de l'art antérieur, tels que décrits par F.HSU.

En particulier, un objet de la présente invention est la mise en oeuvre d'un procédé et d'un dispositif égaliseur à retour de décisions pour la transmission par blocs de symboles d'information dans lesquels la complexité, définie comme le nombre d'opérations de calcul élémentaire consommé pour l'obtention d'une décision, est réduit dans un rapport de l'ordre de M/6 par rapport au procédé et au dispositif de l'art antérieur.

Un autre objet de la présente invention est également la mise en oeuvre d'un procédé et d'un dispositif égaliseur à retour de décisions pour la tranmsission par blocs de symboles d'information dans lesquels le rapport signal à bruit est sensiblement amélioré.

Le procédé égaliseur à retour de décisions pour la transmission par blocs de symboles d'information sur un canal distordant variable, la transmission étant effectuée par blocs de symboles de données intercalés avec des blocs de symboles de référence et la détection de ces symboles étant effectuée, à la réception, à partir d'un vecteur d'observation, objet de la présente invention, est remarquable en ce qu'il consiste à effectuer successivement, à la réception, un blanchiment du bruit affectant les échantillons d'observation reçus, pour engendrer des échantillons d'observation à bruit blanchi successifs, puis une détection du symbole courant sur la base des détections de symboles décidés antérieurs, à partir des échantillons d'observation à bruit blanchi, le blanchiment étant effectué au moyen d'une décomposition de Cholesky.

Le dispositif égaliseur à retour de décisions pour la transmission par blocs de symboles d'information sur un canal distordant variable, la transmission des symboles étant effectuée sous forme de blocs de données, comportant M symboles d'information, intercalés avec des blocs de N symboles de référence, la détection des symboles d'information étant effectuée à partir d'un vecteur d'observation $Y = (Y_M, Y_{M-1}, ..., Y_i, Y_1)^t$ formé d'échantillons d'observation $y_i$ obtenus, à la réception, objet de la présente invention, est remarquable en ce qu'il comporte un circuit de blanchiment du bruit affectant ces échantillons d'observation reçus, $y_i$, permettant de délivrer sur la base d'une décomposition de Cholesky des échantillons d'observation à bruit blanchi successifs $z_i$ de rang i, des circuits multiplicateurs recevant, d'une part, les échantillons d'observation à bruit blanchi $z_i$, et, d'autre part, un coefficient multiplicateur $1/\sigma_{M-i}$ représentant l'élément M-i de la matrice $\Sigma$ de la décomposition de Cholesky, ces circuits multiplicateurs délivrant le produit pi = $z_i/\sigma_{M-i}$, des circuits soustracteurs recevant, d'une part, le produit pi, et, d'autre part, un signal $q_i$, somme pondérée de tous les symboles d'information décidés antérieurs $d_{i-q}$ avec $q\epsilon[1,L']$, L' étant au plus égal à L durée de la mémoire du canal en nombre de symboles transmis, par l'élément correspondant $H_{M-1,M-i+q}$ de la matrice H de la décomposition de Cholesky, lesdits circuits soustracteurs délivrant un signal de décision $s_i$, un circuit comparateur à seuil recevant le signal de décision $s_i$ et délivrant le signal de symbole d'information décidé

$\hat{d}_i$, une boucle de retour recevant le signal de symbole d'information décidé $\hat{d}_i$ et comprenant, d'une part, un circuit pondérateur des signaux de symboles d'information décidés antérieurs $\hat{d}_{i-1}$ à $\hat{d}_{i-q}$ par les éléments $H_{M-i,Mi+q}$ correspondants, et, d'autre part, un circuit sommateur des produits $H_{M-i,M-i+q} \cdot \hat{d}_{i-q}$, avec $q \in [1, L']$, ledit circuit sommateur délivrant le signal $q_i$ à l'entrée de soustraction des circuits soustracteurs.

Le procédé et le dispositif égaliseur à retour de décisions pour la transmission par blocs de symboles d'information objets de l'invention trouvent application au domaine des télécommunications ou télétransmissions d'informations numériques entre émetteurs et récepteurs fixes ou ionosphériques mobiles, en milieu atmosphérique, ionosphérique ou autre.

Une description plus détaillée du procédé et du dispositif égaliseur à retour de décisions pour la transmission par blocs de symboles d'information objet de la présente invention sera donnée dans la description et dans les dessins ci-après dans lesquels, outre les figures 1a et 1b relatives à des éléments connus de l'art antérieur,

- la figure 2a représente une diagramme synoptique illustratif de la mise en oeuvre du procédé de la présente invention,
- la figure 2b représente certains éléments constitutifs des étapes du procédé objet de l'invention tel que représenté en figure 2a,
- la figure 3 représente un schéma synoptique d'un dispositif égaliseur à retour de décisions pour la transmission par blocs de symboles d'information, objet de la présente invention,
- la figure 4 représente un détail de réalisation d'un module de blanchiment du bruit constitutif du dispositif égaliseur à retour de décisions tel que représenté en figure 3,
- la figure 5 représente une variante de réalisation avantageuse non limitative du module de blanchiment du bruit tel que représnté en figure 4,
- la figure 6 représente un diagramme comparatif des valeurs de rapport signal à bruit obtenus suite à la mise en oeuvre des techniques antérieures et du procédé objet de l'invention, en fonction de la position du symbole dans le bloc de symboles considéré.

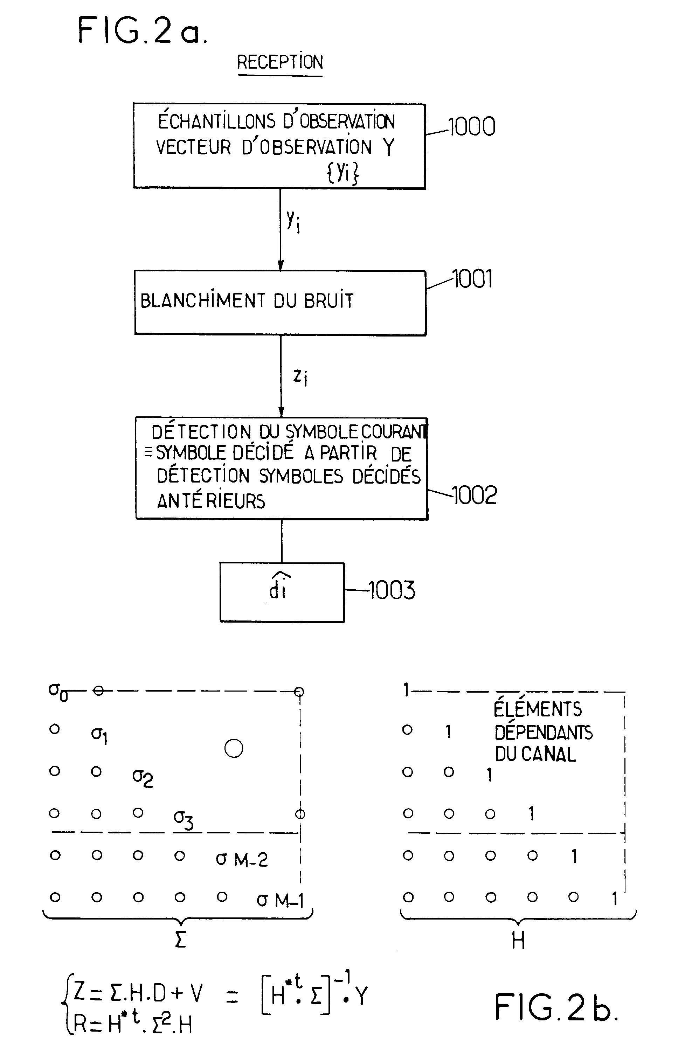

Une description plus détaillée du procédé égaliseur à retour de décisions pour la transmission par blocs de symboles d'information, objet de la présente invention, sera maintenant donnée en liaison avec les figures 2a et 2b.

D'une manière générale, conformément au procédé objet de la présente invention, les symboles d'information sont transmis sur un canal distordant variable, ainsi que mentionné précédemment dans la description. La réception des symboles transmis est effectuée en présence de bruits inhérents à la transmission elle-même et d'interférence entre symboles.

A la réception, la détection de ces symboles est effectuée, ainsi que représenté en figure 2a de manière schématique, à partir d'un vecteur d'observation, noté Y, ce vecteur d'observation étant formé d'échantillons d'observation $y_i$. On comprend bien sûr que le vecteur d'observation Y, et en particulier chacune de ses composantes $y_i$ formée par les échantillons d'observation, est donc le siège non seulement du bruit précité, mais du phénomène d'interférence entre symboles précédemment mentionnés. L'étape de constitution du vecteur d'observation Y formé des échantillons d'observation $y_i$ est notée 1000 sur la figure 2a.

Conformément à une caractéristique particulièrement avantageuse du procédé objet de la présente invention, celui-ci consiste alors, ainsi que représenté sur la figure précitée, à effectuer successivement, à la réception, une étape de blanchiment du bruit, étape notée 1001, affectant des échantillons d'observation reçus de façon à engendrer les échantillons d'observation à bruit blanchi successifs, ces échantillons étant notés $z_i$.

L'étape 1001 précitée est alors suivie d'une étape notée 1002 consistant à effectuer une détection du symbole courant sur la base des détections des symboles décidés antérieurs à partir des échantillons d'observation à bruit blanchi $z_i$. On comprend ainsi qu'en une étape 1003, on dispose du symbole décidé, noté $\hat{d}_i$, lequel est bien entendu représentatif du symbole courant recherché.

On notera en particulier que le procédé objet de la présente invention est rendu possible en raison de l'effet ci-après, qui peut être attribué à la succession des deux étapes 1001 et 1002 précédemment mentionnées :

- la réduction de la puissance du bruit blanchi, et,
- le fait de rendre toute décision sur un symbole décidé actuel $\hat{d}_i$ causale vis-à-vis des seules décisions antérieures, ou d'une pluralité de celles-ci, les échantillons du bruit étant alors effectivement décorellés entre eux.

On notera alors que l'étape 1002 de détection du symbole courant à partir de la détection des symboles décidés antérieurs revient à réaliser une décision par récursivité en utilisant les décisions antérieures ou une pluralité de celles-ci.

D'une manière générale, on considère que l'opération de blanchiment du bruit peut être réalisée d'une manière connue, pourvu toutefois que cette opération permette d'obtenir une décorrélation suffisante des valeurs de bruits successives, le bruit affectant chaque échantillon à bruit blanchi $z_i$ pouvant alors être considéré effectivement comme un bruit blanc.

Toutefois, compte tenu de la nature essentiellement numérique du traitement effectué, conformément au procédé objet de la présente invention, un mode de réalisation particulièrement avantageux de l'opération de blanchiment du bruit sera donné en liaison avec la figure 2b.

Selon ce mode de réalisation, l'opération de blanchiment du bruit peut être effectuée au moyen d'une décomposition de Cholesky, ce qui permet d'effectuer ensuite la décision sur le symbole courant en utilisant un ou plusieurs symboles décidés antérieurs, pour engendrer un symbole décidé représentatif du symbole courant recherché.

D'une manière plus spécifique, on considère que la décomposition de Cholesky est établie à partir de l'expression de la matrice R de covariance de bruit U du canal de transmission sous la forme :

$$R = H^{*^t}.\Sigma^2.H$$

Dans cette relation, H est une matrice triangulaire dont les éléments de la diagonale principale sont égaux à l'unité, l'expression "t" indiquant la transposition, et "*" indiquant la matrice conjuguée. On notera qu'une matrice triangulaire inférieure ou supérieure peut être utilisée, le caractère causal des décisions sur un symbole décidé actuel $\hat{d_i}$ vis-à-vis des décisions antérieures, lors de l'utilisation d'une matrice supérieure, étant rendu anti-causal vis-à-vis des décisions postérieures, lors de l'utilisation d'une matrice triangulaire inférieure.

En outre, $\Sigma$ est une matrice diagonale d'éléments réels positifs, notés $\Sigma_{ii} = \sigma_i, \sigma_i^2$ représentant la puissance moyenne de l'erreur de prédiction obtenue à partir d'un prédicteur d'ordre i avec $i \in [0,..,M-1]$. On rappelle que M désigne le nombre de symboles d'information contenus dans un bloc de données BE.

De par la structure de la transformation opérée par la matrice H, cette transformation est causale, chaque échantillon ou bruit blanchi pouvant être exprimé sous la forme :

$$Z = \Sigma.H.D + V$$

Dans cette relation, on note que Z représente le vecteur des échantillons au bruit blanchi $z_i$,

- $\Sigma$ et H représentent les matrices précédemment mentionnées,
- D représente le vecteur des symboles reçus, avec la relation :

$$Y = R.D + U$$

Ainsi, le vecteur Z des échantillons au bruit blanchi $z_i$ vérifie la relation :

$$Z = [H^{*^t}.\Sigma]^{-1}.Y$$

La détermination des coefficients des matrices précitées peut être effectuée grâce à la mise en oeuvre de l'algorithme de Schur.

Ainsi, pour une matrice MxM de covariance R du bruit du canal de transmission comportant des éléments $R_{ij} = r_{j-i}$ avec $i,j = 0,1,...,M-1$, la décomposition de Cholesky reliant la matrice de covariance précitée aux matrices H et $\Sigma$ précédemment mentionnées peut être réalisée de la manière ci-après à partir d'une matrice triangulaire supérieure B $= \Sigma^2 H$ et d'une matrice auxiliaire C.

L'obtention de la matrice B implique bien entendu l'obtention de la matrice $\Sigma^2 = \text{diag}(B)$.

La matrice B est obtenue à partir de l'algorithme de Schur de la façon ci-après :

$$B_{0,0} = r_0,$$

puis

- pour $j = 1,L : B_{0,j} = C_{0,j} = r_j$
- pour $i = 1,2,M-1 : \Gamma_i = -C_{i-1,i}/B_{i-1,i-1}$
- pour $j = i,i+1,...,\min(i+L, M-1)$, où min représente la valeur minimale des deux arguments,

$$C_{i,j} = C_{i-1,j} + \Gamma_i \cdot B_{i-1,j-1}$$

$$B_{i,j} = B_{i-1,j-1} + \Gamma_i^* \cdot C_{i-1,j}$$

On notera que $C_{i,j} = 0$ pour $i = 0, 1, M-1$.

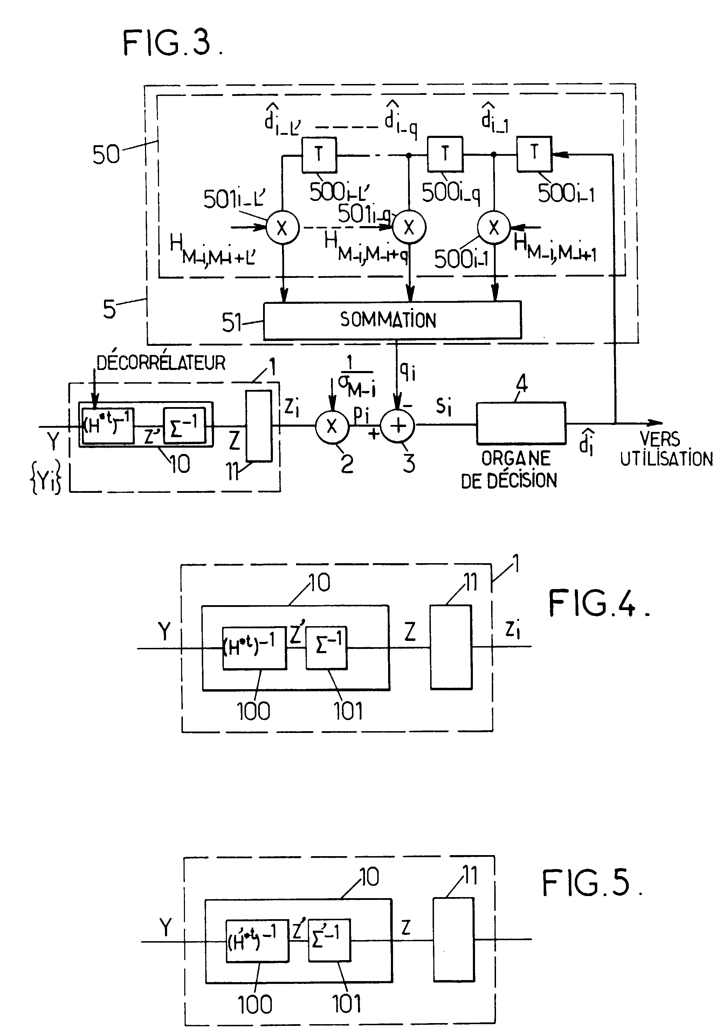

Une description plus détaillée du dispositif égaliseur à retour de décisions pour la transmission par blocs de symboles d'information objet de la présente invention sera maintenant donnée en liaison avec les figures 3 et suivantes.

La transmission des symboles d'information étant effectuée sous forme de blocs de données, comportant M symboles d'information, ainsi que décrit précédemment dans la description, la détection des symboles est effectuée à partir d'un vecteur d'observation $Y = (Y_M, Y_{M-1}, .. Y_i, ..., Y_1)^t$ formé d'échantillons d'observation $Y_i$ obtenus à la réception, c'est-à-dire après filtrage adapté et échantillonnage, ainsi que repré-senté en figure lb, relative au modèle en bande de base de l'art antérieur.

Ainsi qu'on l'observera sur la figure 3, le dispositif égaliseur objet de la présente invention comporte des circuits 1 de blanchiment du bruit affectant les échantillons d'observation reçus $Y_i$ et permettant de délivrer par décomposition de Cholesky des échantillons d'observation à bruit blanchi successifs $z_i$ de rang i.

En outre, des circuits 2 multiplicateurs sont prévus, lesquels reçoivent, d'une part, les échantillons d'observation à bruit blanchi $z_i$ et, d'autre part, un coefficient multiplicateur $1/\sigma_{M-i}$ représentant l'élément M-i de la matrice $\Sigma^{-1}$ de la décomposition de Cholesky. Les circuits multiplicateurs 2 délivrent le produit $pi = z_i/\sigma_{M-i}$.

Un circuit soustracteur 3 est prévu, lequel reçoit, d'une part, le produit pi et, d'autre part, un signal $q_i$, somme pondérée de tous les symboles d'information décidés antérieurs, notés $\hat{d}_{i-q}$, avec $q\epsilon[1,L']$, relation dans laquelle L' est au plus égal à L, la longueur de la mémoire du canal en nombre de symboles transmis, cette somme étant pondérée par l'élément correspondant $H_{M-i,M-i+q}$ de la matrice H de la décomposition de Cholesky. Le circuit soustracteur 3 délivre un signal de décision, $s_i$.

Suite au circuit soustracteur 3 est prévu un circuit comparateur 4 à seuil, lequel reçoit le signal de décision $s_i$ précédemment cité, et délivre le signal de symbole d'information décidé $\hat{d}_i$ correspondant.

En sortie du circuit 4 comparateur à seuil est prévue une boucle de retour 5 recevant le signal de symbole d'information décidé $\hat{d}_i$. Cette boucle de retour comprend, d'une part, un circuit pondérateur des signaux de symbole d'information décidé antérieur $\hat{d}_{i-1}$ à $\hat{d}_{i-q}$ par les éléments $H_{M-i,M-i+q}$ correspondants, et, d'autre part, un circuit 51 sommateur des produits $H_{M-i,M-i+q} \cdot \hat{d}_{i-q}$, avec $q\in[1,L']$. Le circuit sommateur 51 délivre le signal $q_i$ à l'entrée de soustraction des circuits soustracteurs 3.

Bien entendu, la décomposition de Cholesky est établie à partir de l'expression de la matrice R de covariance de bruit du canal de transmission, ainsi que précédemment décrit dans la description.

Dans un mode de réalisation préférentiel du dispositif objet de la présente invention, ainsi que représenté en figure 3, les circuits 1 de blanchiment du bruit peuvent comporter un module de blanchiment du bruit proprement dit 10 suivi d'un circuit de transformation parallèle/série des échantillons, noté 11, lequel permet de délivrer les échantillons au bruit blanchi successifs $z_i$. Ce dernier circuit, ou module de transformation parallèle/série 11, peut être constitué par un circuit de type classique, et, pour cette raison, ne sera pas décrit en détail. Le module 10 du blanchiment du bruit proprement dit des échantillons d'observation peut alors comporter, ainsi que représenté en figure 4, un circuit 100 multiplicateur matriciel, de fonction de transfert $(H^{*t})^{-1}$ recevant le vecteur d'observation Y, et délivrant le vecteur Z' = $(H^{*t})^{-1} \cdot Y$, relation dans laquelle "t" indique un opérateur de transposition.

En outre, le circuit multiplicateur matriciel 100 est suivi d'un circuit multiplicateur matriciel 101 de fonction de transfert $\Sigma^{-1}$ recevant le vecteur Z' précité et délivrant le vecteur $Z = \Sigma^{-1} \cdot Z'$. Le vecteur Z correspond ainsi à un vecteur d'observation à bruit blanchi formé des échantillons d'observation blanchis $z_i$. Bien entendu, le module 11 de transformation parallèle/série permet alors de délivrer successivement les échantillons d'observation blanchis.

En ce qui concerne les modules multiplicateurs matriciels 100 et 101, on notera que ceux-ci sont constitués par exemple par des modules de calcul numérique correspondants. Ces modules de calcul peuvent être, soit des modules logiciels, soit des modules de type mémoire reprogrammables, par exemple.

Ainsi qu'on l'a représenté en outre en figure 3, le circuit pondérateur 50 formant la boucle de retour 5 comporte au plus une pluralité de L cellules de retard 500, chaque cellule de retard étant notée $500_{i-q}$ et apportant un retard d'une période T, T désignant la durée entre deux symboles d'information successifs. Les cellules de retard sont connectées en cascade, l'entrée de la première cellule de retard recevant le symbole d'information décidé $\hat{d}_i$, et la sortie de chaque cellule de retard successive de rang q délivrant respectivement le symbole décidé antérieur $\hat{d}_{i-q}$, avec $q\in[1,L']$.

En outre, le circuit pondérateur 50 comprend au plus une pluralité de L circuits multiplicateurs 501, lesquels portent chacun la référence $501_{i-q}$. Chaque circuit multiplicateur de rang q a une entrée correspondante connectée en sortie de la cellule de retard de rang q et une deuxième entrée recevant un coefficient multiplicateur, noté $H_{M-1,M-i+q}$, élément correspondant de la matrice H de la décomposition de Cholesky.

La sortie de chaque multiplicateur 501 de rang q délivre alors le produit $H_{M-i,M-i+q} \cdot \hat{d}_{i-q}$, et est connectée à une entrée du circuit sommateur 51, constitutif avec la circuit pondérateur 50 de la boucle de retour 5.

Le comparateur à seuil 4 peut être constitué par un circuit de calcul et de minimisation de la distance euclidienne entre le signal de décision $s_i$ délivré par le circuit soustracteur 3, et le symbole $d_i$ de l'alphabet des symboles correspondants. L'alphabet des symboles est contenu dans un fichier dictionnaire correspondant.

Le circuit comparateur à seuil 4 réalise alors la fonction de décision :

$$\hat{d}_i = \operatorname{argmin} \left| s_i - d_i \right|.$$

On comprend bien sûr que l'opération de minimisation de la valeur de la distance euclidienne $|s_i - d_i|$ est effectuée sur tous les symboles $d_i$ de l'alphabet correspondant.

Le mode de fonctionnement du dispositif égaliseur objet de la présente invention tel que représenté en figures 3 et 4 est le suivant :

l'expression du vecteur d'échantillon au bruit blanchi Z s'écrit :

$$Z = \Sigma.H.D + V \qquad \text{avec} \qquad V = (H^{*t}.\Sigma)^{-1}.U.$$

La matrice de covariance du bruit V est également $2N_o.I$.

La transformation H étant causale, la décision sur un symbole $d_i$ peut être effectuée à partir des décisions sur les seuls symboles antérieurs d'une manière similaire à ce qui est effectué dans les égaliseurs de l'art antérieur du type précédemment décrits dans la description.

Une différence essentielle entre l'égaliseur objet de la présente invention et les égaliseurs de l'art antérieur est que les coefficients du filtre constitué par la boucle de retour 5 sont, dans le cadre de l'égaliseur objet de la présente invention, variables au cours du temps, en valeur et en nombre.

Bien entendu, comme dans le cas des dispositifs égaliseurs de l'art antérieur, on suppose que les décisions sur les symboles antérieurs sont correctes. Dans un tel cas, leur interférence peut alors être soustraite du produit $pi = z_i/\sigma_{M-i}$ pour obtenir le signal de décision $s_i$. La décision, c'est-à-dire le symbole décidé $\hat{d}_i$, est alors obtenue à partir du signal de décision $s_i$ grâce au comparateur à seuil 4. Dans le mode de réalisation de l'égaliseur objet de la présente invention, tel que représenté en figure 3, le circuit pondérateur 50, et le circuit de sommation 51, constituent en fait un filtre transverse dont les valeurs et le nombre des coefficients varient avec l'indice temporel i, $L' = \min(i-1,L)$.

On comprend que la relation donnant la valeur du vecteur Z des échantillons au bruit blanchi en relation avec le bruit blanchi V permet alors d'obtenir un ensemble de relations dont la relation d'ordre M s'écrit :

$$s_1 = z_1/\sigma_{M-1} = d_1 + v_1/\sigma_{M-1}.$$

La décision sur $d_1$ minimise la distance euclidienne entre $s_1$ et $d_1$, c'est-à-dire :

$$\hat{d}_1 = \operatorname*{argmin}_{\{d\}} |s_1 - d_1|$$

où le minimum est recherché dans l'alphabet $\{d\}$ des symboles. Les autres relations s'écrivent :

$$s_i = z_i/\sigma_{M-i} - \sum_{k=1}^{L'} H_{M-i,M-i+k} \cdot \hat{d}_{i-k}$$

où $\qquad i = 2,3,...,M \qquad$ et $\qquad L' = \min(1-1,L)$.

$$\hat{d}_i = \text{argmin } |s_i - d_i|$$
$$\{d\}$$

$$s_i = d_i + \sum_{k=1}^{L'} H_{M-i, M-i+k}(d_{i-k} - \hat{d}_{i-k}) + v_i/\sigma_{M-i}$$

Avec l'hypothèse de décisions correctes,
$\hat{d}_{i-k} = d_{i-k}$ , pour k<i, cette dernière relation devient :

$$s_i = d_i + v_i/\sigma_{M-i}$$

Le mode opératoire de l'égaliseur objet de la présente invention tel que précédemment décrit en liaison avec les figures 3 et 4 est plus particulièrement désigné sous le nom d'égaliseur à retour de décision pour transmission par bloc de type forçage à zéro, ou ZF-BDFE.

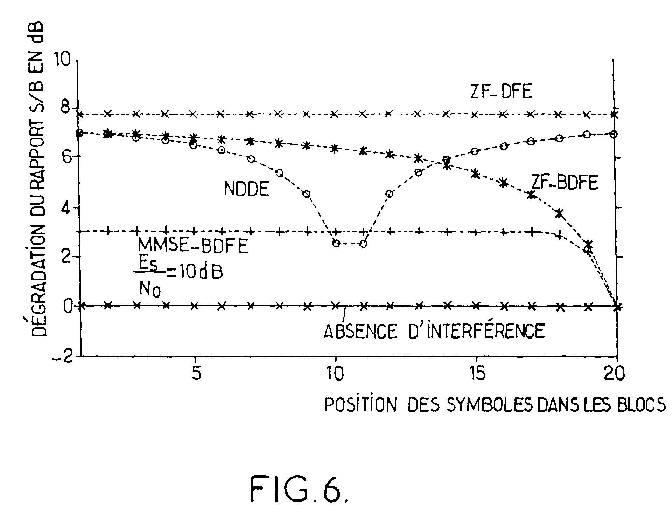

Une variante de réalisation de l'égaliseur objet de la présente invention sera décrite en liaison avec la figure 5.

Sur la figure précitée, on a représenté en fait une variante de réalisation du module de blanchiment du bruit 10, permettant la mise en oeuvre d'un égaliseur à retour de décisions pour transmission par bloc à erreur quadratique moyenne minimum.

Ce mode de réalisation est plus avantageux. Il consiste à remplacer la matrice de covariance du bruit R par une matrice nommée R' qui est reliée à R par la relation

$$R'= [R+aI],$$

où I est la matrice identité et $\underline{a}$ est une constante positive. Sa meilleure valeur est

$$\frac{2N_o}{E(|dk|^2)}$$

La matrice R' a l'avantage de prendre en compte la présence du bruit et d'avoir une dispersion de valeurs propres moins étendues que celle de R.

Le schéma du principe de MMSE-BDFE est le même que celui du ZF-BDFE. La seule différence consiste à remplacer R par R'. Par conséquent, les éléments des matrices $\Sigma$ et H citées ci-dessus doivent être remplacés par ceux de $\Sigma'$ et H', respectivement, ainsi que représenté en figure 5, où $\Sigma'$ et H' sont obtenues par la décomposition de Cholesky suivante :

$$R' = H'^{*t}.\Sigma'^2.H'$$

Dans les relations précédentes, $2N_o$ représente la densité spectrale de puissance de bruit en bande de base,

- $E(|dk|^2)$ représente l'espérance mathématique du module du symbole $|dk|^2$, elle-même représentative de l'énergie du symbole $|dk|$ correspondant,
- I représente la matrice identité.

Ce mode de réalisation, tel que représenté en figure 5, correspond à un égaliseur à retour de décision par blocs à erreur quadratique moyenne minimum, désigné en abrégé par la notation MMSE-BDFE.

Sur la figure 6, on a représenté respectivement la dégradation du rapport signal à bruit S/B en dB, d'une part, pour différents égaliseurs de l'art antérieur, tels que l'égaliseur conventionnel DFE (type forçage à zéro), l'égaliseur de type NDDE, précédemment mentionnés dans la description, et, d'autre part, la dégradation du rapport signal à bruit S/B en dB pour un égaliseur conforme à l'objet de la présente invention, respectivement de type ZF-BDFE, puis de type MMSE-BDFE.

On constate que la valeur du rapport signal à bruit est diminuée en fonction de la position ou rang des symboles d'information dans les blocs. Les diagrammes précités ont été tracés, pour un canal donné, pour des blocs comportant 20 symboles d'information. L'égaliseur de type ZF-BDFE selon l'invention a des performances identiques à celui de l'égaliseur de type NDDE pour la moitié des symboles, alors que les M/2 symboles restant ont une probabilité d'erreur plus faible lorsque l'égaliseur de type ZF-BDFE selon l'invention est utilisé. Sur la figure 6, on constate également que dans le cas d'un égaliseur de type MMSE-BDFE, selon l'invention, les performances sont en outre améliorées par rapport à la variante à forçage de zéro de type ZF-BDFE. Ces types d'égaliseurs objets de l'invention présentent aussi des performances améliorées par rapport aux égaliseurs conventionnels DFE.

On a ainsi décrit un procédé et un dispositif égaliseur à retour de décisions pour la transmission par blocs de symboles d'information particulièrement performant dans la mesure où, alors que les égaliseurs conventionnels utilisent des filtres transversaux, le procédé et le dispositif égaliseur objets de la présente invention utilisent au contraire des opérateurs multiplicateurs matriciels particulièrement performants. Etant entendu que la réponse impulsionnelle du canal, ou une estimation de celle-ci, est disponible, en temps réel, les coefficients du dispositif égaliseur objet de la présente invention, c'est-à-dire les coefficients des matrices ou opérateurs matriciels utilisés, sont déterminées facilement en utilisant par exemple l'algorithme de Schur ainsi que précédemment mentionné. Ceci permet de diminuer d'un facteur significatif au moins égal à M/6 la complexité du dispositif tout en améliorant les performances de ce dernier.

## Revendications

1.  Procédé égaliseur à retour de décisions pour la transmission par blocs de symboles d'information sur un canal distordant variable, en présence de bruit et d'interférence entre symboles, la transmission étant effectuée par blocs de symboles de données intercalés avec des blocs de symboles de référence et la détection de ces symboles étant effectuée, à la réception, à partir d'un vecteur d'observation formé d'échantillons d'observation, caractérisé en ce que ledit procédé consiste à effectuer successivement à la réception:

    -   un blanchiment du bruit affectant lesdits échantillons d'observation reçus, pour engendrer des échantillons d'observation à bruit blanchi successifs, ledit blanchiment du bruit affectant les échantillons d'observation reçus étant effectué au moyen d'une décomposition de Cholesky, ce qui permet d'effectuer une décision sur le symbole courant à partir d'un ou plusieurs symboles décidés antérieurs pour engendrer un symbole décidé représentatif du symbole courant,
    -   une détection du symbole courant sur la base des détections des symboles décidés antérieurs, à partir desdits échantillons d'observation à bruit blanchi.

2.  Procédé selon la revendication 1, caractérisé en ce que ladite décomposition de Cholesky est établie à partir de l'expression de la matrice R de covariance de bruit du canal de transmission sous la forme :

$$R = H^{*t}.\Sigma^2.H$$

    où

    H est une matrice triangulaire dont les éléments de la diagonale principale sont égaux à l'unité, "t" indiquant la transposition et "*" la matrice conjuguée,
    $\Sigma$ est une matrice diagonale d'éléments réels positifs $\Sigma_{ii}=\sigma_i, \sigma_i^2$ représentant la puissance moyenne de l'erreur de prédiction obtenue à partir d'un prédicteur d'ordre i, avec $i\in[0,1,...,M-1]$.

3.  Dispositif égaliseur à retour de décisions pour la transmission par blocs de symboles d'information ($d_i$) sur un canal distordant variable, la transmission desdits symboles d'information étant effectuée sous forme de blocs de données, comportant M symboles d'information, intercalés avec des blocs de N symboles de référence, la détection desdits symboles étant effectuée à partir d'un vecteur d'observation $Y = (Y_M, Y_{M-1},...,Y_i,...,Y_1)^t$ formé d'échantillons d'observation $Y_i$ obtenus à la réception, caractérisé en ce que ledit dispositif égaliseur comporte :

    -   des moyens (1) de blanchiment du bruit affectant lesdits échantillons d'observation reçus, $Y_i$, et permettant de délivrer par décomposition de Cholesky, des échantillons d'observation à bruit blanchi successifs $z_i$ de rang i,
    -   des moyens (2) multiplicateurs recevant, d'une part, lesdits échantillons d'observation à bruit blanchi $z_i$, et,

d'autre part, un coefficient multiplicateur $1/\sigma_{M-i}$, représentant l'élément M-i de la matrice $\Sigma^{-1}$ de la décomposition de Cholesky, lesdits moyens multiplicateurs délivrant le produit $p_i = z_i/\sigma_{M-i}$,

- des moyens (3) soustracteurs recevant, d'une part, le produit $p_i$ et, d'autre part, un signal $q_i$, somme pondérée de tous les symboles d'information décidés antérieurs $\hat{d}_{i-q}$ avec $q\in[1,L']$, L' étant au plus égal à L durée de la mémoire du canal en nombre de symboles transmis, par l'élément correspondant $H_{M-i,M-i+q}$ de la matrice H de la décomposition de Cholesky, lesdits moyens soustracteurs délivrant un signal de décision $s_i$,
- un moyen (4) comparateur à seuil recevant ledit signal de décision $s_i$ et délivrant le signal de symbole d'information décidé $\hat{d}_i$,
- une boucle (5) de retour recevant ledit signal de symbole d'information décidé $\hat{d}_i$ comprenant, d'une part, un circuit pondérateur des signaux de symboles d'information décidés antérieurs $\hat{d}_{i-1}$ à $\hat{d}_{i-q}$ par lesdits éléments $H_{M-i,M-i+q}$ correspondants et, d'autre part, un circuit sommateur des produits $H_{M-i,M-i+q}\cdot \hat{d}_{i-q}$, avec $q\in[1,L']$, ledit circuit sommateur délivrant ledit signal $q_i$ à l'entrée de sous-traction desdits moyens soustracteurs.

4. Dispositif égaliseur selon la revendication 3, caractérisé en ce que, ladite décomposition de Cholesky étant établie à partir de l'expression de la matrice R de covariance de bruit du canal de transmission sous la forme :

$$R = H^{*^t}.\Sigma^2.H$$

où

H est une matrice triangulaire dont les éléments de la diagonale principale sont égaux à l'unité, "t" indiquant la transposition et "*" la matrice conjuguée,
$\Sigma$ est une matrice diagonale d'éléments réels positifs $\Sigma_{ii} = \sigma_i, \sigma^2_i$ représentant la puissance moyenne de l'erreur de prédiction obtenue à partir d'un prédicteur d'ordre i, avec $i\in[0,1,...,M-1]$, lesdits moyens de blanchiment du bruit desdits échantillons d'observation comportent :

- des moyens (100) multiplicateurs matriciel $(H^{*t})^{-1}$ recevant ledit vecteur d'observation Y et délivrant le vecteur $Z'=(H^{*t})^{-1}.Y$, "t" indiquant un opérateur de transposition,
- des moyens (101) multiplicateurs matriciel $\Sigma^{-1}$ recevant ledit vecteur Z' et délivrant le vecteur $Z=\Sigma^{-1}.Z'$, le vecteur Z correspondant à un vecteur d'observation à bruit blanchi formé desdits échantillons d'observation blanchis $z_i$,
- des moyens (11) de transformation parallèle-série permettant à partir des M échantillons d'observation à bruit blanchi $z_i$ délivrés en parallèle par lesdits moyens multiplicateurs matriciel $\Sigma^{-1}$ de délivrer lesdits échantillons d'observation à bruit blanchi $z_i$ successifs.

5. Dispositif selon la revendication 3 ou 4, caractérisé en ce que ledit circuit pondérateur formant la boucle de retour (5) comporte au plus :

- une pluralité de L cellules de retard (500) d'une période T, T désignant la durée entre deux symboles d'information successifs connectées en cascade, l'entrée de la première cellule de retard recevant le symbole d'information décidé $\hat{d}_i$ et la sortie de chaque cellule de retard successive de rang q délivrant respectivement le symbole décidé antérieur $\hat{d}_{i-q}$ avec $q\epsilon[1,L']$,
- une pluralité de L circuits multiplicateurs (501), un circuit multiplicateur de rang q ayant une entrée connectée en sortie de la cellule de retard de rang q correspondante et une deuxième entrée recevant un coefficient multiplicateur $H_{M-i,M-i+q}$ élément correspondant de la matrice H de ladite décomposition de Cholesky, la sortie de chaque multiplicateur de rang q délivrant le produit $H_{M-i,M-i+q}\cdot \hat{d}_{i-q}$ étant connectée à une entrée dudit circuit sommateur formant ladite boucle de retour.

6. Dispositif selon l'une des revendications 3 à 5 caractérisé en ce que ledit moyen (4) comparateur à seuil est constitué par un circuit de calcul et de minimisation de la distance euclidienne entre le signal de décision $s_i$ et le symbole $d_i$ de l'alphabet correspondant :

$$\widehat{d_i} = \underset{\{d\}}{\mathrm{argmin}} \; |s_i - d_i|$$

**7.** Dispositif selon l'une des revendications 4 à 6, caractérisé en ce que ladite décomposition de Cholesky est établie à partir de l'expression de la matrice R' vérifiant les relations

$$R' = [R+aI]$$

où I est la matrice identité et $\underline{a}$ une constante positive, fonction de l'expression

$$\frac{2N_o}{E(|dk|^2)}$$

sous la forme

$$R' = H'^{*t}.\Sigma'^2.H'$$

les matrices H' et $\Sigma'$ étant substituées aux matrices H respectivement $\Sigma$ et de même nature que celles-ci, relation dans laquelle :

$2N_o$   représente la densité spectrale de puissance de bruit en bande de base,

$E(|dk|^2)$   représente l'espérance mathématique du module du symbole dk au carré, représentative de l'énergie du symbole dk correspondant.

**Patentansprüche**

**1.** Verfahren zur entscheidungsrückgekoppelten Entzerrung für die blockweise Übertragung von Informationssymbolen auf einem veränderlichen verzerrenden Kanal bei Vorhandensein von Rauschen und Intersymbol-Interferenzen, wobei die Übertragung in Blöcken von Datensymbolen erfolgt, die mit Blöcken von Referenzsymbolen verschachtelt sind, und wobei die Detektion dieser Symbole beim Empfang anhand eines von Beobachtungsabtastungen gebildeten Beobachtungsvektors erfolgt,
dadurch gekennzeichnet, daß es das Verfahren beinhaltet, beim Empfang nacheinander:

- eine Weißmachung des die empfangenen Beobachtungsabtastungen beeinflussenden Rauschens durchzuführen, um aufeinanderfolgende Beobachtungsabtastungen mit weißgemachtem Rauschen zu erzeugen, wobei die Weißmachung des die empfangenen Beobachtungsabtastungen beeinflussenden Rauschens mittels einer Cholesky-Zerlegung bewirkt wird, was es erlaubt, eine Entscheidung hinsichtlich des momentanen Symbols anhand eines oder mehrerer vorheriger entschiedener Symbole zu treffen, um ein entschiedenes Symbol zu erzeugen, das für das momentane Symbol repräsentativ ist, und
- eine Detektion des momentanen Symbols auf Grundlage der Detektionen der vorherigen entschiedenen Symbole anhand der Beobachtungsabtastungen mit weißgemachtem Rauschen durchzuführen.

**2.** Verfahren nach Anspruch 1,
dadurch gekennzeichnet, daß die Cholesky-Zerlegung anhand der Darstellung der Rauschkovarianzmatrix R des Übertragungskanals in der Form:

$$R = H^{*t}.\Sigma^2.H$$

erfolgt, wobei H eine Dreiecksmatrix ist, deren Hauptdiagonalelemente gleich dem Eins-Element sind, wobei "t" das Transponieren und "*" die konjugierte Matrix darstellen, wobei $\Sigma$ eine Diagonalmatrix von positiven reellen Elementen $\Sigma_{ii} = \sigma_i$, $\sigma_i^2$ ist, welche die mittlere Leistung des bei einem Prädiktor der Ordnung i mit $i \in [0,1,...,M-1]$ erhaltenen Prädiktionsfehlers darstellen.

**3.** Einrichtung zur entscheidungsrückgekoppelten Entzerrung für die blockweise Übertragung von Informationssymbolen $(d_i)$ auf einem veränderlichen verzerrenden Kanal, wobei die Übertragung dieser Informationssymbole in Form von Datenblöcken erfolgt, welche M Informationssymbole umfassen und mit Blöcken von N Referenzsymbolen verschachtelt sind, wobei die Detektion der Symbole anhand eines Beobachtungsvektors $Y = (Y_M, Y_{M-1},..., Y_i,...Y_1)^t$ erfolgt, welcher von beim Empfang erhaltenen Beobachtungsabtastungen $Y_i$ gebildet ist, dadurch gekennzeichnet, daß die Entzerrereinrichtung umfaßt:

- Weißmachungsmittel (1) zum Weißmachen des die empfangenen Beobachtungsabtastungen $Y_i$ beeinflussenden Rauschens, wobei es die Weißmachungsmittel (1) erlauben, durch Cholesky-Zerlegung aufeinanderfolgende Beobachtungsabtastungen $z_i$ vom Rang i mit weißgemachtem Rauschen zu liefern,
- Multiplikatormittel (2), welche zum einen die Beobachtungsabtastungen $z_i$ mit weißgemachtem Rauschen und zum anderen einen Multiplikatorkoeffizienten $1/\sigma_{M-i}$ erhalten, der das Element M-i der Matrix $\Sigma^{-1}$ der Cholesky-Zerlegung darstellt, wobei die Multiplikatormittel das Produkt $p_i = z_i/\sigma_{M-i}$ liefern,
- Subtrahiermittel (3), welche zum einen das Produkt $p_i$ und zum anderen ein Signal $q_i$ erhalten, das die gewichtete Summe aller vorherigen entschiedenen Informationssymbole $\hat{d}_{i-q}$ mit q∈[1,L') ist, wobei L' höchstens gleich L, der Speicherdauer des Kanals als Anzahl übertragener Symbole, ist, und zwar gewichtet mit dem entsprechenden Element $H_{M-i,M-i+q}$ der Matrix H der Cholesky-Zerlegung, wobei die Subtrahiermittel ein Entscheidungssignal $s_i$ liefern,
- ein Schwellenvergleichermittel (4), welches das Entscheidungssignal $s_i$ erhält und das entschiedene Informationssymbolsignal $\hat{d}_i$ liefert, und
- eine Rückkopplungsschleife (5), welche das entschiedene Informationssymbolsignal $\hat{d}_i$ erhält und zum einen eine Wichtungsschaltung zum Wichten der vorherigen entschiedenen Informationssymbolsignale $\hat{d}_{i-1}$ bis $\hat{d}_{i-q}$ mit den entsprechenden Elementen $H_{M-i,M-i+q}$ und zum anderen eine Summierschaltung zum Summieren der Produkte $H_{M-i, M-i+q} \cdot \hat{d}_{i-q}$ mit q∈[1,L'] umfaßt, wobei die Summierschaltung das Signal $q_i$ an den Subtrahiereingang der Subtrahiermittel liefert.

4. Entzerrereinrichtung nach Anspruch 3,
dadurch gekennzeichnet, daß die Cholesky-Zerlegung anhand der Darstellung der Rauschkovarianzmatrix R des Übertragungskanals in der Form:

$$R = H^{*t} \cdot \Sigma^2 \cdot H$$

erfolgt, wobei H eine Dreiecksmatrix ist, deren Hauptdiagonalelemente gleich dem Eins-Element sind, wobei "t" das Transponieren und "*" die konjugierte Matrix darstellen, wobei $\Sigma$ eine Diagonalmatrix von positiven reellen Elementen $\Sigma_{ii} = \sigma_i$, $\sigma^2_i$ ist, welche die mittlere Leistung des bei einem Prädiktor der Ordnung i mit i∈[0,1,...M-1] erhaltenen Prädiktionsfehlers darstellen, wobei die Weißmachungsmittel zum Weißmachen des Rauschens der Beobachtungsabtastungen umfassen:

- Matrizenmultiplikatormittel $(H^{*t})^{-1}$ (100), welche den Beobachtungsvektor Y erhalten und den Vektor $Z' = (H^{*t})^{-1} \cdot Y$ liefern, wobei "t" einen Transponierungsoperator angibt,
- Matrizenmultiplikatormittel $\Sigma^{-1}$ (101), welche den Vektor Z' erhalten und den Vektor $Z = \Sigma^{-1} \cdot Z'$ liefern, wobei der Vektor Z einem Beobachtungsvektor mit weißgemachtem Rauschen entspricht, der von den weißgemachten Beobachtungsabtastungen $z_i$ gebildet ist,
- Parallel-Seriell-Umformungsmittel (11), welche es erlauben, anhand der von den Matrizenmultiplikatormitteln $\Sigma^{-1}$ parallel gelieferten M Beobachtungsabtastungen $z_i$ mit weißgemachtem Rauschen die aufeinanderfolgenden Beobachtungsabtastungen $z_i$ mit weißgemachtem Rauschen zu liefern.

5. Einrichtung nach Anspruch 3 oder 4,
dadurch gekennzeichnet, daß die die Rückkopplungsschleife (5) bildende Wichtungsschaltung darüber hinaus umfaßt:

- eine Mehrzahl von L in Kaskade geschalteten Verzögerungszellen (500) mit einer Periode T, wobei T die Dauer zwischen zwei aufeinanderfolgenden Informationssymbolen bezeichnet, wobei der Eingang der ersten Verzögerungszelle das entschiedene Informationssymbol $\hat{d}_i$ erhält und der Ausgang jeder nachfolgenden Verzögerungszelle vom Rang q jeweils das vorherige entschiedene Symbol $\hat{d}_{i-q}$ mit q∈[1,L'] liefert, und
- eine Mehrzahl von L Multiplikatorschaltungen (501), wobei eine Multiplikatorschaltung vom Rang q einen mit dem Ausgang der entsprechenden Verzögerungszelle vom Rang q verbundenen Eingang sowie einen zweiten Eingang aufweist, der einen Multiplikatorkoeffizienten $H_{M-i M-i+q}$, also das entsprechende Element der Matrix H der Cholesky-Zerlegung, erhält, wobei der das Produkt $H_{M-i, M-i+q} \cdot \hat{d}_{i-q}$ liefernde Ausgang jedes Multiplikators vom Rang q mit einem Eingang der die Rückkopplungsschleife bildenden Summierschaltung verbunden ist.

**6.** Einrichtung nach einem der Ansprüche 3 bis 5,
dadurch gekennzeichnet, daß das Schwellenvergleichermittel (4) von einer Rechen- und Minimierungsschaltung zur Berechnung und Minimierung des Euklid'schen Abstands zwischen dem Entscheidungssignal $s_i$ und dem Symbol $d_i$ des entsprechenden Alphabets gebildet ist:

$$\hat{d}_i = \underset{\{d\}}{\text{argmin}} \ |s_i - d_i|$$

**7.** Einrichtung nach einem der Ansprüche 4 bis 6,
dadurch gekennzeichnet, daß die Cholesky-Zerlegung anhand der Darstellung der Matrix R' erfolgt, welche die Beziehungen

$$R' = [R+aI]$$

erfüllt, wobei I die Identitätsmatrix ist und a eine positive Konstante ist, die eine Funktion des Ausdrucks

$$\frac{2N_o}{E(|dk|^2)}$$

ist, und zwar in der Form

$$R' = H'^{*t} \cdot \Sigma'^2 \cdot H'$$

wobei die Matrizen H' und $\Sigma$' an die Stelle der Matrizen H bzw. $\Sigma$ treten und gleicher Art wie diese sind, wobei in der Beziehung:

$2N_o$        die spektrale Dichte der Rauschleistung im Basisband darstellt,
$E(|dk|^2)$        den mathematischen Erwartungswert des Betragsquadrats des Symbols dk darstellt, der für die Energie des entsprechenden Symbols dk repräsentativ ist.

## Claims

**1.** Decision feedback equaliser method for the block transmission of information symbols over a variable distorting channel, in the presence of noise and of inter-symbol interference, the transmission being performed in data symbol blocks interleaved with reference symbol blocks and the detection of these symbols being performed, at the receiving end, from an observation vector formed from observation samples, said method characterized by performing, at the receiving end, in succession :

- a whitening of the noise affecting the said received observation samples, in order to generate successive whitened-noise observation samples, said whitening of the noise affecting the received observation samples being performed by means of a Cholesky decomposition, thus enabling a decision to be made regarding the current symbol from one or more earlier decided symbols in order to generate a decided symbol representative of the current symbol,
- a detection of the current symbol on the basis of the detections of the earlier decided symbols, from the said whitened-noise observation samples.

**2.** Method according to Claim 1, characterized by said Cholesky decomposition being formulated from the expression for the noise covariance matrix R of the transmission channel in the form :

$$R = H^{*t} \cdot \Sigma^2 \cdot H$$

where

H   is a triangular matrix, the elements of the main diagonal of which are equal to one, "t" indicating transposition and "*" the conjugate matrix,

$\Sigma$   is a diagonal matrix of positive real elements, $\Sigma_{ii} = \sigma_i . \sigma_i^2$ representing the mean power of the prediction error obtained from a predictor of order i, with $i \in [0,1,...,M-1]$.

**3.**  Decision feedback equaliser device for the block transmission of information symbols ($d_i$) over a variable distorting channel, the transmission of the said information symbols being performed in the form of data blocks, containing M information symbols, interleaved with blocks of N reference symbols, the detection of the said symbols being performed from an observation vector $Y=(Y_M, Y_{M-1},...,Y_i,...,Y_1)^t$ formed from observation samples $Y_i$ obtained at the receiving end, characterized by said equaliser device including :

-   means (1) of whitening the noise affecting the said received observation samples, $Y_i$, and making it possible to deliver by Cholesky decomposition successive whitened-noise observation samples $z_i$ of rank i,
-   multiplier means (2) receiving, on the one hand, the said whitened-noise observation samples $z_i$, and, on the other hand, a multiplier coefficient $1/\sigma_{M-i}$, representing the element M-i of the matrix $\Sigma^{-1}$ of the Cholesky decomposition, the said multiplier means delivering the product $p_i = z_i/\sigma_{M-i}$,
-   subtracter means (3) receiving, on the one hand, the product $p_i$ and, on the other hand, a signal $q_i$, the sum of all the earlier decided information symbols $\hat{d}_{i-q}$ with $q \in [1,L']$, L' being at most equal to L, L designating the duration of the memory of the channel in number of transmitted symbols, weighted by the corresponding element $H_{M-i,M-i+q}$ of the matrix H of the Cholesky decomposition, the said subtracter means delivering a decision signal $s_i$,
-   a threshold-comparator means (4) receiving the said decision signal si and delivering the decided information symbols signal $\hat{d}_i$,
-   a feedback loop (5) receiving the said decided information symbols signal $\hat{d}_i$ comprising, on the one hand, a circuit weighting the earlier decided information symbols signals $\hat{d}_{i-1}$ to $\hat{d}_{i-q}$ by the said corresponding elements $H_{M-i,M-i+q}$ and, on the other hand, a circuit summing the products $H_{M-i,M-i+q} . \hat{d}_{i-q}$, with $q \in [1,L']$, the said summing circuit delivering the said signal $q_i$ at the subtraction input of the said subtractor means.

**4.**  Detector device according to Claim 3, characterized by the said Cholesky decomposition being formulated from the expression for the noise covariance matrix R of the transmission channel in the form :

$$R = H^{*^t} . \Sigma^2 . H$$

where

H   is a triangular matrix, the elements of the main diagonal of which are equal to one, "t" indicating transposition and "*" the conjugate matrix,

$\Sigma$   is a diagonal matrix of positive real elements $\Sigma_{ii} = \sigma_i . \sigma_i^2$ representing the mean power of the prediction error obtained from a predictor of order i, with $i \in [0,1,...,M-1]$, the said means of whitening the noise of the said observation samples include :

-   matrix multiplier $(H^{*t})^{-1}$ means (100) receiving the said observation vector Y and delivering the vector $Z' = (H^{*t})^{-1} . Y$, "t" indicating a transposition operator,
-   matrix multiplier $\Sigma^{-1}$ multiplier means (101) receiving the said vector Z' and delivering the vector $Z = \Sigma^{-1} . Z'$, the vector Z corresponding to a whitened-noise observation vector formed from the said whitened observation samples $z_i$,
-   means (11) of parallel/serial conversion making it possible, from the M whitened-noise observation samples $z_i$ delivered in parallel by the said matrix multiplier means $\Sigma^{-1}$, to deliver the said successive whitened-noise observation samples $z_i$.

**5.**  Device according to Claim 3 or 4, characterized by said weighting circuit forming the feedback loop (5) including at most :

-   a plurality of L delay cells (500), connected in cascade, for delaying by a period T, T denoting the duration between two successive information symbols, the input of the first delay cell receiving the decided information

symbol $\hat{d}_i$ and the output of each successive delay cell of rank q delivering respectively the earlier decided symbol $\hat{d}_{i-q}$ with $q \in [1, L']$,

- a plurality of L multiplier circuits (501), a multiplier circuit of rank q having an input connected as output from the corresponding delay cell of rank q and a second input receiving a multiplier coefficient $H_{M-i,M-i+q}$ corresponding element of the matrix H of the said Cholesky decomposition, the output of each multiplier of rank q delivering the product $H_{M-i,M-i+q} \cdot \hat{d}_{i-q}$ being connected to an input of the said summing circuit forming the said feedback loop.

6. Device according to one of the Claims 4 to 6, characterized by said threshold comparator means (4) consisting of a circuit for calculating and minimising the Euclidean distance between the decision signal $s_i$ and the symbol $d_i$ of the corresponding alphabet :

$$\hat{d}_i = \underset{\{d\}}{\text{argmin}} \, | \, s_i - d_i |$$

7. Device according to one of the Claims 4 to 6, characterized by said Cholesky decomposition being formulated from the expression for the matrix R' satisfying the relations

$$R' = [R + aI]$$

where I is the identity matrix and $\underline{a}$ a positive constant, dependent on the expression

$$\frac{2N_o}{E(|dk|^2)}$$

in the form

$$R' = H'^{*t} \cdot \Sigma'^2 \cdot H'$$

the matrices H' and $\Sigma'$ being substituted for the matrices H and $\Sigma$ respectively and of the same nature as the latter, a relation in which :

$2N_o$ represents the baseband noise power spectral density,

$E(|dk|^2)$ represents the mathematical expectation of the modulus of the symbol dk squared, representative of the energy of the corresponding symbol dk.

BI
SYMBOLES
CONNUS

BE
SYMBOLES
D'INFORMATION

BI
SYMBOLES
CONNUS

BE
SYMBOLES
D'INFORMATION

BI
SYMBOLES
CONNUS

$$d_M - - - d_1$$

# FIG.1a. STRUCTURE DES BLOCS

BI SYMBOLES CONNUS $\boxed{r_n}$ INTERFÉRENCE
DES SYMBOLES
CONNUS

BRUIT

$\sum_n d_n \, \delta(t-nT)$ $\boxed{f(t)}$ $\oplus$ $\boxed{f^*(t)}$ $y'_n$ $\oplus$ $y_n$

ÉCHANTILLONNAGE

# FIG.1b. MODELE EN BANDE DE BASE

# FIG.2a.

RECEPTION

ÉCHANTILLONS D'OBSERVATION VECTEUR D'OBSERVATION Y $\{y_i\}$ ───1000

$y_i$

BLANCHIMENT DU BRUIT ───1001

$z_i$

DÉTECTION DU SYMBOLE COURANT ≡ SYMBOLE DÉCIDÉ A PARTIR DE DÉTECTION SYMBOLES DÉCIDÉS ANTÉRIEURS ───1002

$\widehat{d_i}$ ───1003

$\sigma_0$ ○ ○ ○

○ $\sigma_1$ ○

○ ○ $\sigma_2$

○ ○ ○ $\sigma_3$ ○

○ ○ ○ ○ $\sigma_{M-2}$

○ ○ ○ ○ ○ $\sigma_{M-1}$

$\underbrace{\qquad\qquad}_{\Sigma}$

1 ───

○ 1 ÉLÉMENTS DÉPENDANTS DU CANAL

○ ○ 1

○ ○ ○ 1

○ ○ ○ ○ 1

○ ○ ○ ○ ○ 1

$\underbrace{\qquad\qquad}_{H}$

$$\begin{cases} Z = \Sigma.H.D + V = \left[H^{*t}.\Sigma\right]^{-1}.Y \\ R = H^{*t}.\Sigma^2.H \end{cases}$$

# FIG.2b.

# FIG.3.

# FIG.4.

# FIG.5.

FIG.6.